(19) Europäisches Patentamt
European Patent Office
Office européen des brevets

(11) **EP 0 949 833 A2**

(12) **EUROPÄISCHE PATENTANMELDUNG**

(43) Veröffentlichungstag:
13.10.1999 Patentblatt 1999/41

(51) Int. Cl.⁶: **H04Q 7/38**, H04Q 7/32

(21) Anmeldenummer: 99104641.8

(22) Anmeldetag: 09.03.1999

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **09.04.1998 DE 19816084**
**22.04.1998 DE 19817895**

(71) Anmelder:
**Orga Kartensysteme GmbH**
**33104 Paderborn (DE)**

(72) Erfinder: **Eichinger, Siegfried**
**Frazer, PA 19355 (US)**

(54) **Mobilfunkendgerät**

(57) Es wird ein Mobilfunkendgerät zur Kommunikation (Sprach- und Datenübermittelung) über ein Mobilfunknetz beschrieben, in dem mindestens eine Zugangsnummer (A) zu einem Telekommunikations-Vermittlungsdienst (CallingCard-Service) und eine korrespondierende persönliche Identifizierungsnummer (B) abgespeichert ist, wobei das Mobilfunkendgerät nach bereits erfolgter Authentifikation gegenüber dem Mobilfunknetz zum Kommunikationsaufbau die Zugangsnummer (A) und die persönliche Identifizierungsnummer (B) bereitstellt und absendet.

Fig.1

EP 0 949 833 A2

**Beschreibung**

Die Erfindung bezieht sich auf ein Mobilfunkendgerät zur Kommunikation (Sprach-und Datenübermittlung) über ein Mobilfunknetz, auf einen tragbaren Datenträger für derartige Mobilfunkendgeräte und auf ein Mobilfunknetz, in dem diese eingesetzt werden.

Unter einem derartigen Mobilfunknetz wird beispielsweise eines nach dem GSM-, PCS oder DCS-Standard oder ein satellitengestütztes Mobilfunknetz verstanden.

Dabei kann mit dem Mobilfunkendgerät Verbindung zu einem Teilnehmer innerhalb dieses Mobilfunknetzes, zu einem Teilnehmer eines anderen Mobilfunknetzes desselben Landes, zu einem Teilnehmer eines Telekommumkations-Festnetzes desselben Landes, zu einem Teilnehmer eines Mobilfunknetzes eines anderen Landes oder zu einem Teilnehmer eines Telekommunikations- Festnetzes eines anderen Landes aufgenommen werden.

Aus dem Telekommunikationsbereich ist ein sogenannter CallingCard-Service (Telekommunikations-Vermittlungsdienst) bekannt, wo der Teilnehmer von einem Telekommunikationsendgerät (beispielsweise ein öffentlicher Fernsprecher oder ein Hoteltelefon) aus nach Wahl einer kostenfreien Zugangsnummer und einer persönlichen Identifikationsnummer mit dem CallingCard-Service-Center verbunden wird und bei erfolgreicher Identifikation und Eingabe der gewünschten Teilnehmernummer über das CallingCard-Service-Center mit dem Anschluß des gewünschten Teilnehmers verbunden wird. Ein derartiger Calling-Card-Service wird z.B. in Deutschland von der Deutschen Telekom AG unter dem Namen T-Card-Service angeboten. Die von dem Benutzer zusätzlich zur gewünschten Teilnehmernummer einzugebende Nummer - bestehend aus der gebührenfreien Zugangsnummer + persönlicher Identifikationsnummer + ggf. einer weiteren persönlichen Nummer(PIN) - ist sehr lang und erfordert eine gewisse Konzentration bei der Eingabe, da ansonsten die Wahrscheinlichkeit einer Fehleingabe hoch ist

Die Abrechnung der über den CallingCard-Service getätigten Telefonate kann dabei in einer 1. Variante jeweils nach einem Telefonat durch Abbuchung von einem bereits im Voraus eingezahlten Betrag/Guthaben (Prepaid-Verfahren) erfolgen, wobei, wenn kein Guthaben mehr vorhanden ist, auch keine weiteren Telefonate mehr möglich sind. In einer 2. Variante (Postpaid-Verfahren) erfolgt die Abrechnung aufgrund eines vertraglichen Dauerschuldverhältnisses immer nur in gewissen Zeitabständen (beispielsweise einmal im Monat) im Nachhinein, wobei es innerhalb dieses Zeitabschnittes keine Beschränkung hinsichtlich eines maximalen Gebührenaufkommens gibt.

Aufgabe der Erfindung ist es, CallingCard-Dienste für die Benutzer von Mobilfunksystemen in einfacher Weise verfügbar zu machen.

Diese Aufgabe wird durch die Merkmale der unabhängigen Patentansprüche gelöst. Die sich daran jeweils anschließenden Unteransprüche enthalten vorteilhafte Ausgestaltungen der Erfindung.

In dem erfindungsgemäßen Mobilfunkendgerät zur Sprach-und Datenübermittlung sind mindestens eine Zugangsnummer (A) zu einem Telekommunikations-Vermittlungsdienst (CallingCard-Service) und eine korrespondierende persönliche Identifizierungsnummer (B) abgespeichert. Dabei stellt das Mobilfunkendgerät nach bereits erfolgter Authentifikation gegenüber dem Mobilfunknetz zum eigentlichen Kommunikationsaufbau die Zugangsnummer (A) und die persönliche Identifizierungsnummer (B) bereit und sendet diese ab. Für den Benutzer bedeutet dies eine enorme Erleichterung, da der nicht die sehr langen „Zahlenkolonen" eingeben muß.

Dabei gibt der Benutzer nachdem er vom CallingCard-Service identifiziert wurde seine gewünschte Teilnehmernummer über die Tastatur des Mobilfunkendgerätes ein oder teilt diese einem Operator des CallingCard-Service mit, woraufhin er zum gewünschten Teilnehmer weitervermittelt wird.

In einer alternativen Ausführungsform der Erfindung vorgesehen, daß automatisch zum Kommunikationsaufbau aus der Zugangsnummer (A), der persönlichen Identifizierungsnummer (B) und der gewünschten Teilnehmernummer eine Gesamtnummer gebildet und diese abgesendet wird; d.h. der Benutzer gibt ganz normal die gewünschte Rufnummer ein und alles weitere, CallingCard-spezifische läuft automatisch im Hintergrund ab.

Bei den Mobilfunkendgeräten handelt es sich um Mobilfunktelefone oder um Mobilfunktelefone in Verbindung mit einem Laptop, so daß beispielsweise auch das Senden und Empfangen von Telefaxen und e-mails möglich ist.

Die „persönliche" Identifizierungsnummer muß nicht notwendiger Weise einer natürlichen Person (z.B. Herr Meier) oder einer juristischen Person (z.B. Firma Meier) zugeordnet sein. Im Falle eines vorausbezahlten (Prepaid-Verfahren) CallingCard-Service kann die persönliche Identifzierungsnummer auch einem ansonsten anonymen Guthabenkonto zugeordnet sein.

Eine besonders vorteilhafte Ausführungform wird realisiert mit Mobilfunkendgeräten, die in der Lage sind, jeweils das Land und/oder das Mobilfunknetz, in dessen Sende- und Empfangsbereich sie sich befinden, zu erkennen und einen entprechenden Kennungscode (LOCI) für das Land und/oder das Mobilfunknetz abzuspeichern. Diese Funktionalität ist beispielsweise bei Mobilfunkendgeräten gemäß dem GSM-Standard gegeben. In erfindungsgemäßer Weise sind in dem Mobilfunkendgerät nun zwei oder mehrere länderspezifische und/oder mobilfunknetzspezifische Zugangsnummern (A) gespeichert, wobei das Mobilfunkendgerät anhand des Kennungscodes (LOCI) automatisch die jeweils aktuelle Zugangsnummer (A) auswählt. Dies ist besonderes dann von Vorteil, wenn ein bestimmter CallingCard-Service über die Grenzen eines Landes und/oder Mobilfunknetzes hinaus verfügbar sein soll, wobei jedoch die Zugangsnummern zu dem CallingCard-Service, die in der Regel kostenfrei sind, von Land zu Land und/oder von Mobilfunknetz zu Mobilfunknetz unterschiedlich sind. So ist der gegenwärtige Präfix für kostenfreie Zugangsnummern in Deutschland 0130... , während er in den USA 1800... ist. Darüber hinaus existieren in einem Land im allgemeinen mehrere Mobilfunknetze, die jeweils unterschiedliche Zugangsnummern zu ein und demselben CallingCard-Service haben können. So gibt es in Deutschland beispeilsweise gegenwärtig das C-Netz, D1-, D2 und das E-Plus-Netz. Der Benutzer wird nun erfindungsgemäß auch noch davon entlastet, jeweils nachzuschauen, welche Zugangsnummer denn in diesem Land und/oder Mobilfunknetz gültig ist. Das lästige Mitführen von „Beipackzetteln" für den CallingCard-Service, auf denen die verschiedenen Zugangsnummern verzeichnet sind, ist nicht mehr nötig.

Dabei kann die in dem Mobilfunkendgerät gespeicherte Zugangsnummer (A) aus einem länderspezifischen und/oder mobilfunknetzspezifischen Teil ($A_i$ und/oder $A_j$) und einem für. den CallingCard-Service spezifischen Teil ($A_{FIX}$) bestehen, der land-und/oder mobilfunknetzunabhängig ist. Erfindungsgemäß sind nun in dem Mobilfunkendgerät für zwei oder mehrere Länder und/oder Mobilfunknetze die zugehörigen Zugangsnummernteile ($A_i$ und/oder $A_j$) abgespeichert. Das Mobilfunkendgerät wählt dann jeweils automatisch in Abhängigkeit vom aktuellen Kennungscode (LOCI) automatisch den jeweils aktuellen länderspezifischen und/oder mobilfunknetzspezifischen Teil ($A_i$ und/oder $A_j$) der Zugangsnummer (A) aus der gespeicherten Liste der länderspezifischen und/oder mobilfunknetzspezifischen Zugangsnummernteile ($A_i$ und/oder $A_j$) aus und vervollständigt mit diesem Teil die Zugangsnummer (A):

$A = A_i / A_{FIX}$ , wenn die Zugangsnummer nur einen länderspezifischen Anteil enthält, oder

$A = A_j / A_{FIX}$ , wenn die Zugangsnummer nur einen mobilfunknetzspezifischen Anteil enthält, oder

$A = A_i / A_j / A_{FIX}$, wenn die Zugangsnummer einen länderspezifischen und einen mobilfunknetzspezifischen Anteil enthält.

In jedem Fall wird der so ausgewählten und zusammengestellten Zugangsnummer (A) in erfindungsgemäßer Weise die persönliche Identifizierungsnummer (B) hinzugefügt.

Sollte auch die persönliche Identifizierungsnummer (B) für verschiedene Länder und/oder Mobilfunknetze unterschiedlich sein, so werden auch diese verschiedenen Nummern in erfindungsgemäßer Weise in dem Mobilfunkendgerät gespeichert, wobei das Mobilfunkendgerät wiederum anhand des aktuellen lokalen Kennungscodes (LOCI) die dann jeweils gültige persönliche Identifizierungsnummer (B) auswählt.

Die Zugangsnummer (A) und die persönliche Identifizierungsnummer (B) können in verschiedenen Datenfeldern abgespeichert sein. Allerdings ist es auch vorgesehen, daß beide zu einem Zugangs-String zusammengefaßt in einem Datenfeld abgespeichert sind. Zugangs-String = $A_i / A_{FIX} / B$ .

Auch hier können erfindungsgemäß in dem Mobilfunkendgerät zwei oder mehrere länderspezifische und/oder mobilfunknetzspezifische Zugangs-Strings gespeichert sein und anhand des Kennungscodes (LOCI) ausgewählt werden.

In einer Ausführungsform der Erfindung ist es vorgesehen, daß mit dem Mobilfunkendgerät nur Kommunikationsverbindungen unter Aktivierung der Zugangsnummer (A), d.h. nur über den CallingCard-Service, aufgebaut werden können. Daneben ist es auch vorgesehen, daß mit dem Mobilfunkendgerät wahlweise Verbindungen unter Aktivierung der Zugangsnummer (A) als auch ohne, d.h. keine Beanspruchung des CallingCard-Service, einfach durch Absenden der gewünschten Teilnehmernummer aufgebaut werden können.

In einer Ausführungsform der Erfindung ist es vorgesehen, daß das Mobilfunkendgerät einen tragbaren Datenträger, insbesondere in Form einer Chipkarte (SIM-Karte; Subscriber Identificaton Module) aufweist, auf der zumindest die Zugangsnummer (n) (A), die persönliche Identifizierungsnummer(n) (B) oder der (die) Kennungscode(s) (LOCI) abgespeichert sind.

Es liegt somit im Rahmen der Erfindung, alle diese Daten (Zugangsnummer(n), persönliche Identifizierungsnummer(n), Kennungscode(s) ) nur auf der SIM-Karte zu speichern oder alle diese Daten nur in einem Speicher des Mobilfunkendgerätes außerhalb der SIM-Karte zu speichern oder aber einen Teil der Daten auf der SIM-Karte und den anderen Teil auf einem Speicher des Mobilfunkendgerätes außerhalb der SIM-Karte zu speichern. Über eine entsprechende in dem Mobilfunkendgerät und/oder in der SIM-Karte, die einen eigenen Mikroprozessor aufweist, installierte Ablaufsteuerung (Software) wird dann der Kennungscode (LOCI) aus dem jeweiligen Speicher ausgelesen und anhand des Kennungscodes die entsprechende Zugangsnummer aus dem jeweiligen Speicher aktiviert und für den Kommünikationsaufbau mit der persönlichen Identifizierungsnummer aus dem jeweiligen Speicher kombiniert oder der entsprechende Zugangs-String ausgewählt.

In Mobilfunknetzen nach dem GSM-Standard wird bereits heute eine persönliche Chipkarte (SIM-Karte) zur Authentifikation des Teilnehmers gegenüber dem Mobilfunknetz eingesetzt. Bei diesen SIM-Karten ist auch bereits die Abspeicherung eines länderspezifischen und/oder mobilfunknetzspezifischen Kennungscodes (LOCI) vorgesehen.

Für die erfindunggemäße Verwendung der SIM-Karte ist vorzugsweise auf dem nicht flüchtigen Speicher (EEPORM) der SIM-Karte ein Datenfeld zur Abspeicherung von mindestens einer jeweils länderspezifischen und/oder mobilfunknetzspezifischen Zugangsnummer (A) zum CallingCard-Service abgespeichert. Wenn die Zugangsnummer (A) aus einem unveränderlichen, Callingcard-Service spezifischen Teil ($A_{FIX}$) und jeweils länderspezifischen und/oder mobilfunknetzspezifischen Teilen ($A_i/A_j$) besteht, so sind separate Datenfelder hierfür in der SIM-Karte vorgesehen.

Darüber hinaus ist auf dem nicht flüchtigen Speicher (EEPORM) der SIM-Karte ein Datenfeld zur Abspeicherung der persönlichen Identifizierungsnummer (B) vorgesehen. Falls die persönliche Identifizierungsnummer von Land zu Land und/oder von Mobilfunknetz zu Mobilfunknetz variieren sollte, ist auch die Abspeicherung von mehreren länderspezifischen und/oder mobilfunknetzspezifischen persönlichen Identifizierungsnummern in diesem Datenfeld vorgesehen.

Desweiteren ist es vorgesehen, auf dem nicht flüchtigen Speicher (EEPORM) der SIM-Karte Zugangs-Strings jeweils bestehend aus der Zugansnummer (A) und der persönlichen Identifizierungsnummer (B) abzuspeichern.

In einer besonders vorteilhaften Ausführungsform der Erfindung ist es vorgesehen, daß die anhand des jeweils aktuellen Kennungscodes (LOCI) ausgewählte Zugangsnummer (A) bzw. der ausgewählte Zugangs-String in ein weiteres Datenfeld auf dem nicht flüchtigen Speicher der SIM-Karte übertragen wird, so daß immer (so lange der Teilnehmer das Land bzw. Mobilfunknetz nicht wechselt) die aktuelle Zugangsnummer (A) bzw. der aktulle Zugangs-String zur Verfügung steht.

Dabei ist auch die Möglichkeit vorgesehen, daß das Datenfeld, auf dem die jeweils aktuelle Zugangsnummer (A) bzw. der jeweils aktuelle Zugangs-String gespeichert wird, ein sogenanntes Fixed-Dialing-Number-Verzeichnis ist, wobei das Mobilfunkendgerät in einen solchen Zustand versetzt werden kann, daß nur die Nummern in diesem Verzeichnis gewählt werden können. Ein solches Verzeichnis existiert bereits bei GSM-SIM-Karten, so daß dies für den erfindungsgemäßen Zweck in vorteilhafter Weise verwendet werden kann.

Es soll noch darauf hingewiesen werden, daß die Erfindung den großen Vorteil hat, daß in dem Mobilfunknetz in einfacher Weise (d.h. in für den Benutzer einfach zu handhabender Weise) eine zusätzliche Prepaid-Option auch für sogenannte Service-Provider, die über keinen eigenen Mobilfunknetzbetrieb verfügen und darauf angewiesen sind, Netzkapazität von den Netzbetreibern zu mieten, geschaffen wird. Dies ist um so bedeutender, da eine Prepaid-Variante sowohl für die Teilnehmer in dem Mobilfunknetz als auch für die Dienste-Anbieter (Mobilfunknetzbetreiber und Service-Provider) aus verschiedenen Gründen immer mehr an Gewicht gewinnt. Für den Teilnehmer im Mobilfunknetz bedeutet die Prepaid-Varinate eine Art Selbstkontrolle, da er, nachdem er das Prepaidguthaben abtelefoniert hat, nicht mehr unkontrolliert weitertelefonieren und Kosten verursachen kann. Für den Dienste-Anbieter bietet die Prepaid-Varinate Sicherheit mit Blick auf Kunden, deren Bonität er für gering hält oder noch nicht geprüft hat.

Bisher bekannte Prepaid-Optionen in einem Mobilfunknetz basieren auf sogenannten Prepaid-Service Centern, die unmittelbar in die Architektur des Mobilfunknetzbetreibers eingebunden sind, so daß nur Mobilfunknetzbetreiber selbst ihren Kunden eine Prepaid-Option anbieten konnten, nicht jedoch die Service-Porvider in diesem Netz. Bei der bekannten Prepaid-Variante in einem Mobilfunknetz werden die von der Mobilfunkzentrale (MSC) erzeugten Abrechnungsbelege jeweils unmittelbar nach einem Telefonat oder auch während bestimmter Zeitintervalle während eines Telefonats an das Prepaid-Service Center weitergeleitet. In dem Prepaid-Service Center sind die Teilnehmeridentifizierungen der Prepaidkunden und das aktuelle Guthaben gespeichert, wobei das Guthaben entsprechend der Abrechnungsbelege jeweils möglichst unverzüglich aktualisiert wird. Dabei wird jeweils vor einem Gespräch mit Hilfe des Prepaid-Service Centers „nachgeschaut", ob noch ein Guthaben vorhanden ist. Ein derartiges Prepaid-Verfahren erfordert jedoch die direkte und unverzügliche (nach jedem Telefonat oder in noch kürzeren Zeitabständen) Weiterleitung der von der Mobilfunkzentrale erzeugten Abrechnungsbelege. Diese Verbindung existiert jedoch nicht zwischen einem reinen Service-Provider und der Mobilfunkzentrale.

Ein reiner Service-Provider für Mobilfunksysteme ist unter Einbeziehung eines CallingCard-Service in der Lage, seinen eigenen Prepaid-Service einzurichten, indem er Gespräche von Prepaidkunden nur dann weitervermittelt, wenn diese noch über ein Guthaben verfügen. Die Attraktivität eines CallingCard-Service wird aufgrund der wesentlich einfacheren Handhabung entsprechend der Erfindung für den Kunden wesentlich größer.

Ein weiterer Vorteil, der sich aus der Erfindung ergibt, soll nachfolgend erläutert werden. In Mobilfunksystemen gibt es das sogenannte „Roaming", worunter verstanden wird, daß Teilnehmer eines bestimmten Mobilfunknetzes mit ihrem Mobilfunkendgerät auch in fremden Mobilfunknetzen kommunizieren können, wobei natürlich die entsprechenden Mobilfunknetzbetreiber die administrativen (vertraglichen) und technischen (Austausch von Teilnehmer-Identifizierungsdaten; Austausch von Abrechnungsbelegen) Voraussetzungen hierfür geschaffen haben müssen. Allerdings wird nicht automtisch allen Mobilfunknetz-Teilnehmern das „Roaming-Privileg" eingeräumt. Auch hier hängt die Entscheidung, ob einem Teilnehmer dies „Roaming-Privileg" eingeräumt wird, von der Bonität des Teilnehmers ab. Da für die bisher bekannte Prepaid-Variante in Mobilfunksystemen die technischen und administrativen Voraussetzungen zum Austausch der für das „Roaming" von Teilnehmern erforderlichen Daten nicht existieren, sind Prepaid-Teilnehmer bisher generell vom Roaming ausgeschlossen. Auch hier ist ein reiner Service-Provider für Mobilfunksysteme unter Einbeziehung eines CallingCard-Service in der Lage, seinen Prepaidkunden „Roaming" anzubieten, indem er Auslandsgespräche von Prepaidkunden nur dann weitervermittelt wenn diese noch über ein Guthaben verfügen.

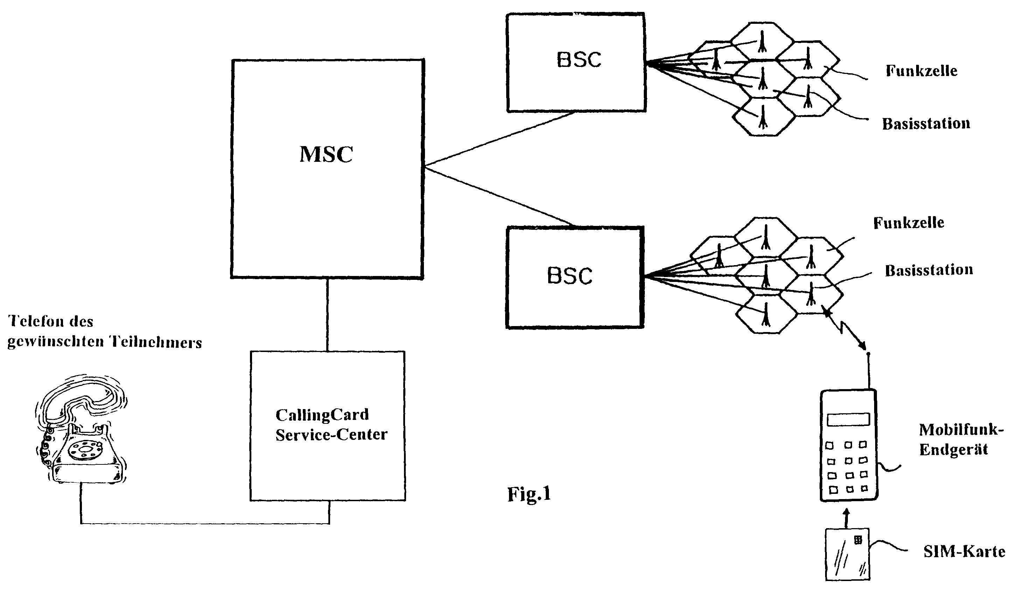

Anhand der beigefügten Zeichnungen soll die Erfindung veranschaulicht werden. In Figur 1 ist schematisch ein Mobilfunknetz dargestellt. Ein derartiges Mobilfunknetz besteht aus einer Vielzahl von waberförmig angeordneten, sich überlappenden Funkzellen, in denen sich jeweils eine Basisstation (Sende-und Empfangsstation) zur drahtlosen Kommunikation mit den sich in der Funkzeile befindlichen Mobilfunkendgeräten befindet. Mehrere Basisstationen stehen wiederum in Verbindung mit einem sogenannten Base-Station-Controller (BSC), von denen es mehrere im Mobilfunknetz gibt. Diese regeln unter anderem das Umschalten der Kommunikation von einer Funkzelle zu einer benachbarten Funkzelle. Die einzelnen Base-Station-Controller (BSC) sind nun ihrerseits mit einer übergeordneten Mobilfunkzentrale - dem sogenannten Mobile Switching-Center (MSC) verbunden. Diese Mobilfunkzentrale dient unter anderem als Schnittstelle zwischen dem Mobilfunknetz und einem drahtgebundenen Fernmeldenetz. Hierüber erfolgt auch die automatische Weiterleitung zum CallingCard-Service-Center, das dann wiederum den Anruf zum gewünschten Teilnehmer weiterleitet. Bei dem hier dargestellten Mobilfunknetz authentifiziert sich der Teilnehmer gegenüber dem Netz über eine in das Mobilfunkendgerät einzugebende Chipkarte (SIM-Karte).

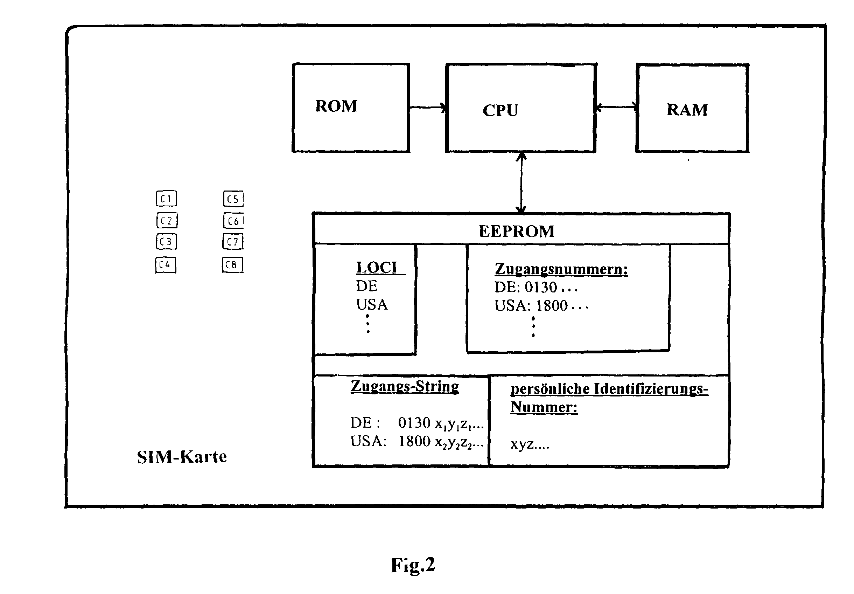

In Figur 2 ist die Architektur der SIM-Karte näher dargestellt. Die elektrischen Kontaktflächen ($C_i$) zur Kommunikation über die Kontaktiereinheit (nicht dargestellt) mit dem Mobilfunkendgerät sind ebenfalls gezeigt. Die Kontaktflächen sind im einzelnen für :

die serielle, bidirektionale Datenübertragung (I/O),
das Taktsignal (CLK),
die Versorgungsspannung (VCC),
das Resetsignal (RST) und
die Masse (GND).

Die SIM-Karte, eine Mikroprozessorkarte, weist eine Central Processing Unit (CPU) auf. Daneben verfügt die Chipkarte (2) über einen ROM (Read Only Memory), in dem das Betriebssystem gespeichert ist, und einen nicht flüchtigen aber überschreibbaren (programmierbaren) Speicher (EEPROM, Electrical Erasable Programmable Read Only Memory). Als Arbeitsspeicher verfügt die Chipkarte (2) über einen flüchtigen RAM-Speicher (Random-Access-Memory). In dem EEPROM befindet sich auch das Fixed-Dialing-Number-Verzeichnis, in das die jeweils aktuellen Zugangsdaten in vorteilhafter Weise übertragen werden.

Entsprechend der Erfindung sind nun in dem EEPROM die länderspezifischen und/oder mobilfunknetzspezifischen Zugangsnummern und die persönliche Identifizierungsnummer bzw. die länderspezifischen und/oder mobilfunknetzspezifischen Zugangs-Strings sowie der Kennungscode gespeichert.

Das Einschreiben der Zugangsnummern und der persönlichen Identifizierungsnummer erfolgt vorzugsweise in einem sogenannten Personalisierungsschritt beim Kartenhersteller oder beim Kartenherausgeber. Es ist jedoch auch möglich, daß dies nachträglich erfolgt, wenn die Karte sich bereits im Besitz des Teilnehmers befindet. Das Einschreiben lediglich der Zugangsnummern könnte auch schon in einem der Personalisierung vorgelagerten sogenannten Initialisierungsschritt erfolgen.

Darüber hinaus ist es auch vorgesehen, daß der Teilnehmer selbst die Zugangsnummer und die Identifizierungsnummer über die Tastatur des Mobilfunkendgerätes eingibt und abspeichert.

Ferner ist es vorgesehen, daß Zugangsnummer und die Identifizierungsnummer mittels einer sogenannten und dem GSM-Fachmann bekannten „Short-Message" über die „Luftschnittstelle" (Over-The Air) zum Mobilfunkgerät und zur darin befindlichen SIM-Karte übertragen werden.

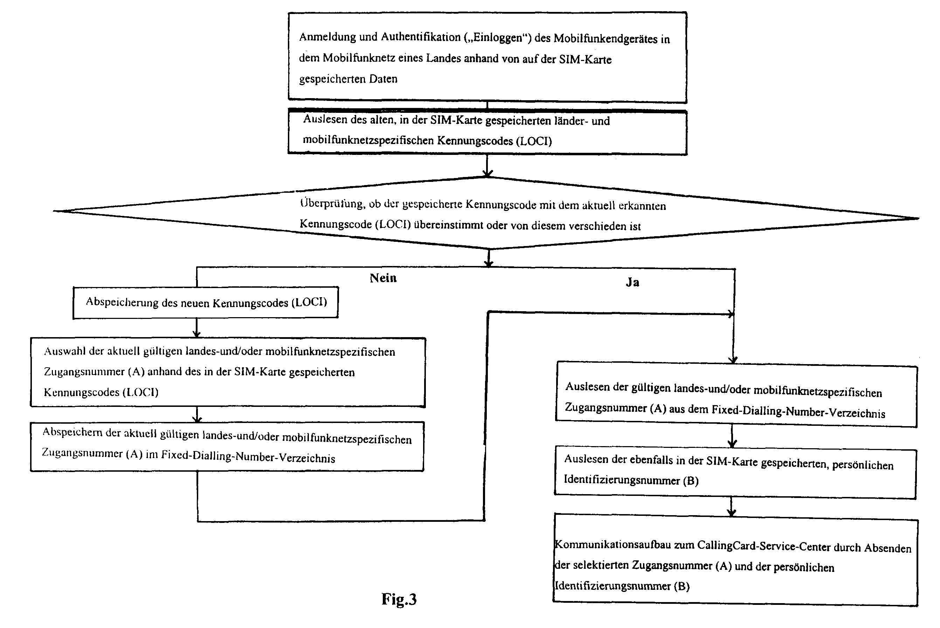

Abschließend soll noch auf Fig. 3 verwiesen, wo ein Ablaufverfahren zur Nutzung eines CallingCard-Service in einem Mobilfunknetz entsprechend der Erfindung beschrieben ist.

**Patentansprüche**

1. Mobilfunkendgerät zur Kommunikation (Sprach- und Datenübermittelung) über ein Mobilfunknetz dadurch gekennzeichnet, daß in dem Mobilfunkendgerät mindestens eine Zugangsnummer (A) zu einem Telekommunikations-Vermittlungsdienst (CallingCard-Service) und eine korrespondierende persönliche Identifizierungsnummer (B) abgespeichert ist, wobei das Mobilfunkendgerät nach einer Authentifikation gegenüber dem Mobilfunknetz zum Kommunikationsaufbau die Zugangsnummer (A) und die persönliche Identifzierungsnummer (B) bereitstellt und absendet.

2. Mobilfunkendgerät nach Anspruch 1, dadurch gekennzeichnet, daß in demselben zwei oder mehrere länderspezifische und/oder mobilfunknetzspezifische Zugangsnummern (A) gespeichert sind, wobei das Mobilfunkendgerät jeweils das Land und/oder das Mobilfunknetz, in dessen Sende- und Empfangsbereich es sich befindet, erkennt und anhand dieser Information automatisch die jeweils aktuelle Zugangsnummer (A) auswählt.

3. Mobilfunkendgerät nach Anspruch 2,
dadurch gekennzeichnet, daß
dasselbe jeweils den Kennungscode (LOCI) für das Land und/oder das Mobilfunknetz, in dessen Sende- und Empfangsbereich es sich befindet, abspeichert, und anhand dieses Kennungscodes (LOCI) die jeweils aktuelle Zugangsnummer (A) auswählt.

4. Mobilfunkendgerät nach einem der vorstehenden Ansprüche,
dadurch gekennzeichnet, daß
die in dem Mobilfunkendgerät gespeicherte Zugangsnummer (A) aus einem länderspezifischen und/oder mobilfunknetzspezifischen Teil ($A_i$ und/oder $A_j$) und einem für den CallingCard-Service spezifischen Teil ($A_{FIX}$) besteht, der land- und/oder mobilfunknetzunabhängig ist, wobei das Mobilfunkendgerät anhand der Information in welchem Land und/oder Mobilfunknetz es sich befindet, den jeweils aktuellen länderspezifischen und/oder mobilfunknetzspezifischen Teil ($A_i$ und/oder $A_j$) der Zugangsnummer (A) auswählt und mit diesem Teil die Zugangsnummer (A) vervollständigt.

5. Mobilfunkendgerät nach einem der vorstehenden Ansprüche,
dadurch gekennzeichnet, daß
in demselben zwei oder mehrere länderspezifische und/oder mobilfunknetzspezifische persönliche Identifizierungsnummern (B) gespeichert sind, wobei das Mobilfunkendgerät anhand der Information, in welchem Land und/oder Mobilfunknetz es sich befindet, automatisch die jeweils aktuelle persönliche Identifizierungsnummer (B) auswählt.

6. Mobilfunkendgerät nach einem der vorstehenden Ansprüche,
dadurch gekennzeichnet, daß
in dem Mobilfunkendgerät die Zugangsnummer (A) und die persönliche Identifizierungsnummer (B) zu einer Nummer (Zugangs-String) zusammengefaßt abgespeichert sind.

7. Mobilfunkendgerät nach Anspruch 6,
dadurch gekennzeichnet, daß
in demselben zwei oder mehrere länderspezifische und/oder mobilfunknetzspezifische Zugangs-Strings gespeichert sind, wobei das Mobilfunkendgerät anhand der Information, in welchem Land und/oder Mobilfunknetz es sich befindet, automatisch den jeweils aktuellen Zugangs-String auswählt.

8. Mobilfunkendgerät nach einem der vorstehenden Ansprüche,
dadurch gekennzeichnet, daß
nach Wahl einer gewünschten Teilnehmernummer automatisch zum Kommunikationsaufbau aus der Zugangsnummer (A), der persönlichen Identifizierungsnummer (B) und der gewünschten Teilnehmernummer eine Gesamtnummer gebildet wird und diese abgesendet wird.

9. Mobilfunkendgerät nach einem der vorstehenden Ansprüche,
dadurch gekennzeichent, daß
mit demselben nur Verbindungen unter Aktivierung der Zugangsnummer (A) aufgebaut werden können.

10. Mobilfunkendgerät nach einem der Ansprüche 1 bis 8,
dadurch gekennzeichnet, daß
mit demselben wahlweise Verbindungen unter Aktivierung der Zugangsnummer (A) aufgebaut werden können oder Verbindungen auch ohne Aktivierung der Zugangsnummer (A), d.h. keine Beanspruchung des CallingCard-Service, durch Absenden nur der Teilnehmernummer aufgebaut werden können.

11. Mobilfunkendgerät nach einem der vorstehenden Ansprüche,
dadurch gekennzeichnet, daß
dasselbe einen tragbaren Datenträger, inbesondere eine SIM-Karte, aufweist, auf der zumindest die Zugangsnummer (A) gespeichert ist.

12. Mobilfunkendgerät nach einem der vorstehenden Ansprüche,
dadurch gekennzeichnet, daß
dasselbe einen tragbaren Datenträger, insbesondere eine SIM-Karte, aufweist, auf der zumindest die persönliche Identifizierungsnummer (B) gespeichert ist.

13. Mobilfunkendgerät nach einem der vorstehenden Ansprüche,
dadurch gekennzeichnet, daß
dasselbe einen tragbaren Datenträger, insbesondere eine SIM-Karte, aufweist, auf der der Kennungscode (LOCI) für das Land und/oder das Mobilfunknetz, in dessen Sende- und Empfangsbereich sich das Mobilfunkendgerät befindet, gespeichert ist.

14. Personenbezogene Chipkarte (SIM-Karte) für ein Mobilfunkendgerät, die zur Authentifikation des Mobilfunkteilnehmers gegenüber dem Mobilfunknetz dient, wobei auf der SIM-Karte jeweils ein Kennungscode (LOCI) für das Land und/oder Mobilfunknetz, in dessen Sende-und/oder Empfangsbereich das Mobilfunkendgerät sich befindet, abspeicherbar ist,
dadurch gekennzeichnet, daß
auf dem nicht flüchtigen Speicher (EEPROM) der SIM-Karte ein Datenfeld zur Abspeicherung von mindestens einer jeweils länderspezifischen und/oder mobilfunknetzspezifischen Zugangsnummer (A) zu einem Telekommunikations-Vermittlungsdienst (CallingCard-Service) vorgesehen ist.

15. Personenbezogene Chipkarte (SIM-Karte) für ein Mobilfunkendgerät, die zur Authentifikation des Mobilfunkteilnehmers gegenüber dem Mobilfunknetz dient, wobei auf der SIM-Karte jeweils ein Kennungscode (LOCI) für das Land und/oder Mobilfunknetz, in dessen Sende-und/oder Empfangsbereich das Mobilfunkendgerät sich befindet, abspeicherbar ist,
dadurch gekennzeichnet, daß
auf dem nicht flüchtigen Speicher (EEPROM) der SIM-Karte ein Datenfeld zur Abspeicherung eines CallingCard-Service spezifischen Teils ($A_{FIX}$) einer Zugangsnummer (A) zu einem CallingCard-Service vorgesehen ist, und ein Datenfeld zur Abspeicherung von zwei oder mehreren jeweils länderspezifischen und/oder mobilfunknetzspezifischen Teilen ($A_i$ und/oder $A_j$) der Zugangsnummer (A) vorgesehen ist.

16. Personenbezogene Chipkarte (SIM-Karte) für ein Mobilfunkendgerät, die zur Authentifikation des Mobilfunkteilnehmers gegenüber dem Mobilfunknetz dient, wobei auf der SIM-Karte jeweils ein Kennungscode (LOCI) für das Land und/oder Mobilfunknetz, in dessen Sende-und/oder Empfangsbereich das Mobilfunkendgerät sich befindet, abspeicherbar ist,
dadurch gekennzeichnet, daß
auf dem nicht flüchtigen Speicher (EEPROM) der SIM-Karte ein Datenfeld zur Abspeicherung von einer oder mehreren jeweils länderspezifischen und/oder mobilfunknetzspezifischen persönlichen Identifizierungsnummern (B) vorgesehen ist.

17. Personenbezogene Chipkarte (SIM-Karte) für ein Mobilfunkendgerät, die zur Authentifikation des Mobilfunkteilnehmers gegenüber dem Mobilfunknetz dient, wobei auf der SIM-Karte jeweils ein Kennungscode (LOCI) für das Land und/oder Mobilfunknetz, in dessen Sende-und/oder Empfangsbereich das Mobilfunkendgerät sich befindet, abspeicherbar ist,
dadurch gekennzeichnet, daß
auf dem nicht flüchtigen Speicher (EEPROM) der SIM-Karte ein Datentfeld zur Abspeicherung von mindestens einer jeweils länderspezifischen und/oder mobilfunknetzspezifischen Zugangsnummer (A) zu einem Telekommunikations-Vermittlungsdienst (CallingCard-Service) vorgesehen ist und aufdem nicht flüchtigen Speicher (EEPROM) der SIM-Karte ein Datenfeld zur Abspeicherung von einer oder mehreren jeweils länderspezifischen und/oder mobilfunknetzspezifischen persönlichen Identifizierungsnummern (B) vorgesehen ist.

18. Personenbezogene Chipkarte (SIM-Karte) für ein Mobilfunkendgerät, die zur Authentifikation des Mobilfunkteilnehmers gegenüber dem Mobilfunknetz dient, wobei auf der SIM-Karte jeweils ein Kennungscode (LOCI) für das Land und/oder Mobilfunknetz, in dessen Sende-und/oder Empfangsbereich das Mobilfunkendgerät sich befindet, abspeicherbar ist,
dadurch gekennzeichnet, daß
auf dem nicht flüchtigen Speicher (EEPROM) der SIM-Karte ein Datenfeld zur Abspeicherung eines CallingCard-Service spezifischen Teil ($A_{FIX}$) einer Zugangsnummer (A) zu einem CallingCard-Service vorgesehen ist, und ein Datenfeld zur Abspeicherung von zwei oder mehreren jeweils länderspezifischen und/oder mobilfunknetzspezifischen Teilen ($A_i$ und/oder $A_j$) der Zugangsnummer (A) vorgesehen ist, und
auf dem nicht flüchtigen Speicher (EEPROM) der SIM-Karte ein Datenfeld zur Abspeicherung von einer oder mehreren jeweils länderspezifischen und/oder mobilfunknetzspezifischen persönlichen Identifizierungsnummern (B) vorgesehen ist.

19. Personenbezogene Chipkarte (SIM-Karte) für ein Mobilfunkendgerät, die zur Authentifikation des Mobilfunkteilnehmers gegenüber dem Mobilfunknetz dient, wobei auf der SIM-Karte jeweils ein Kennungscode (LOCI) für das Land und/oder Mobilfunknetz, in dessen Sende-und/oder Empfangsbereich das Mobilfunkendgerät sich befindet, abspeicherbar ist,
dadurch gekennzeichnet, daß
aufdem nicht flüchtigen Speicher (EEPROM) der SIM-Karte ein Datenfeld zur Abspeicherung von einem oder mehreren jeweils länderspezifischen und/oder mobilfunknetzspezifischen Zugangs-Strings vorgesehen ist, wobei der Zugangs-String aus einer Zugangsnummer (A) zum einem CallingCard-Service und einer korrespondierenden persönlichen Identifizierungsnummer (B) besteht.

20. Personenbezogene Chipkarte (SIM-Karte) nach einem der Ansprüche 14 bis 19,
dadurch gekennzeichnet, daß
anhand des Kennungscodes (LOCI) die jeweils aktuelle länderspezifische und/oder mobilfunknetzspezifische Zugangsnummer (A), Zugangs-String und/oder persönliche Identifizierungsnummer (B) ausgewählt und in ein weiteres Datenfeld auf dem nicht flüchtigen Speicher (EEPROM) der SIM-Karte übertragen wird.

21. Personenbezogene Chipkarte (SIM-Karte) nach Anspruch 20,
dadurch gekennzeichnet, daß
das Datenfeld, auf dem die jeweils aktuelle Zugangsnummer (A), Zugangs-String und/oder die persönliche Identifizierungsnummer (B) gespeichert wird, ein sogenanntes Fixed-Dialing-Number-Verzeichnis ist, wobei das Mobilfunkendgerät in einen solchen Zustand versetzt werden kann, daß nur die Nummern in diesem Verzeichnis gewählt werden können.

22. Mobilfunknetz zur Sprach- und Datenübertragung mit einer Vielzahl von Mobilfunkendgeräten,
dadurch gekennzeichnet, daß
zumindest bei einem Teil der in diesem Mobilfunknetz eingesetzten Mobilfunkendgeräte mindestens eine Zugangsnummer (A) zu einem Telekommunikations-Vermittlungsdienst (CallingCard-Service) und eine korrespondierende persönliche Identifizierungsnummer (B) abgespeichert ist, wobei das Mobilfunkendgerät nach einer Authentifikation gegenüber dem Mobilfunknetz zum Kommunikationsaufbau die Zugangsnummer (A) und die persönliche Identifizierungsnummer (B) bereitstellt und absendet.

23. Mobilfunknetz zur Sprach- und Datenübertragung mit einer Vielzahl von Mobilfunkendgeräten nach Anspruch 22,
dadurch gekennzeichnet, daß
in den entsprechenden Mobilfunkendgeräten

- zwei oder mehrere länder- und/oder mobilfunknetzspezifische Zugangsnummern (A),
- zwei oder mehrere länder- und/oder mobilfunknetzspezifische persönliche Identifizierungsnummern (B) oder
- zwei oder mehrere länder und/oder mobilfunknetzspezifische Zugangs-Strings bestehend aus Zugangs-Nummer (A) und persönlicher Identifikationsnummer (B) abgespeichert sind, und das Mobilfunkendgerät anhand eines lander-und/oder mobilfunknetzspezifischen Kennungscodes für das Sende-und Empfangsgebiet, in dem das Mobilfunkendgerät sich befindet, automatisch
- die jeweils aktuelle Zugangsnummer (A),
- die jeweils aktuelle persönliche Identifikationsnummer (B) oder
- den jeweils aktuellen Zugangs-String aktiviert.

Fig.1

ROM → CPU ← RAM

C1  C5
C2  C6
C3  C7
C4  C8

**EEPROM**

**LOCI**
DE
USA
⋮

**Zugangsnummern:**
DE: 0130 ...
USA: 1800 ...
⋮

**Zugangs-String**

DE :   0130 $x_1 y_1 z_1$...
USA:   1800 $x_2 y_2 z_2$...

**persönliche Identifizierungs-Nummer:**

xyz....

**SIM-Karte**

**Fig.2**

Anmeldung und Authentifikation („Einloggen") des Mobilfunkendgerätes in dem Mobilfunknetz eines Landes anhand von auf der SIM-Karte gespeicherten Daten

Auslesen des alten, in der SIM-Karte gespeicherten länder- und mobilfunknetzspezifischen Kennungscodes (LOCI)

Überprüfung, ob der gespeicherte Kennungscode mit dem aktuell erkannten Kennungscode (LOCI) übereinstimmt oder von diesem verschieden ist

**Nein**

**Ja**

Abspeicherung des neuen Kennungscodes (LOCI)

Auswahl der aktuell gültigen landes-und/oder mobilfunknetzspezifischen Zugangsnummer (A) anhand des in der SIM-Karte gespeicherten Kennungscodes (LOCI)

Abspeichern der aktuell gültigen landes-und/oder mobilfunknetzspezifischen Zugangsnummer (A) im Fixed-Dialling-Number-Verzeichnis

Auslesen der gültigen landes-und/oder mobilfunknetzspezifischen Zugangsnummer (A) aus dem Fixed-Dialling-Number-Verzeichnis

Auslesen der ebenfalls in der SIM-Karte gespeicherten, persönlichen Identifizierungsnummer (B)

Kommunikationsaufbau zum CallingCard-Service-Center durch Absenden der selektierten Zugangsnummer (A) und der persönlichen Identifizierungsnummer (B)

**Fig.3**